(19) Europäisches Patentamt
European Patent Office
Office européen des brevets

(11) EP 3 778 441 A1

(12) **EUROPEAN PATENT APPLICATION**
published in accordance with Art. 153(4) EPC

(43) Date of publication:
**17.02.2021 Bulletin 2021/07**

(21) Application number: **18914478.5**

(22) Date of filing: **13.04.2018**

(51) Int Cl.:
***B65G 47/53*** *(2006.01)*
***B65G 47/08*** *(2006.01)*
***B65G 47/14*** *(2006.01)*
***B65G 47/256*** *(2006.01)*
***B65G 47/82*** *(2006.01)*

(86) International application number:
**PCT/JP2018/015608**

(87) International publication number:
**WO 2019/198240 (17.10.2019 Gazette 2019/42)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(71) Applicant: **Azbil Corporation**
**Chiyoda-ku**
**Tokyo 100-6419 (JP)**

(72) Inventor: **BEPPU, Hisashi**
**Tokyo 100-6419 (JP)**

(74) Representative: **Lavoix**
**Bayerstrasse 83**
**80335 München (DE)**

(54) **TRANSPORT DEVICE AND FURNACE SYSTEM**

(57) A transport device comprises: a plate 10; an unloading apparatus 30 to push a plurality of articles 20 disposed on the plate 10; a conveyor 40 to transport the articles pushed from the plate 10; and a pusher 80 to push articles 20, from among the articles 20 pushed onto the conveyor 40, that have not tipped over back toward the plate 10, and to separate, on the conveyor 40, articles 20A that have not tipped over from articles 20Z that have tipped over.

Fig. 1

10
100
30
20
70
10
5
50
50
20
40
20A
20Z
80

EP 3 778 441 A1

## Description

Technical Field

The present invention relates to a transport device and a furnace system.

Background Art

For example, when manufacturing products such as pharmaceutical products and food products, containers may be stored in a furnace to apply temperature treatment or pressure treatment such as freeze-drying treatment to contents in the containers. A conveyor is disposed in front of the furnace. The conveyor transports containers to be carried into the furnace and containers discharged from the furnace (for example, see Patent Literatures 1 to 3).

Patent Literature 1 proposes a method of transferring a row of containers onto a conveyor by inserting a thin sheet from a conveyor side under a row of containers closest to the conveyor among a plurality of containers arranged on a plate and pulling the sheet.

Patent Literature 2 proposes a method to be performed when pushing out and discharging containers from a furnace via a plate onto a conveyor by fixing a row of the containers adjacent to a row of containers pushed out onto the conveyor on the plate by a suction device to prevent the containers in the adjacent row of the container from being pulled out and mixed into the row of the containers pushed out onto the conveyor.

Patent Literature 3 proposes a method of pushing a row of containers from a plurality of the containers arranged on a plate onto a conveyor, and then preventing the containers on the plate from coming into contact with the conveyor by moving the plate with the containers arranged thereon upward or moving the conveyor downward.

Citation List

Patent Literature

PTL 1: EP1717533B
PTL 2: WO2015/082563A
PTL 3: US2009/208320A

Summary of Invention

Technical Problem

If one or more of containers pushed out of a furnace onto a conveyor fall over, the container (s) which has (have) fallen over may come into contact with containers that have not fallen over and may cause other containers to fall over when the conveyor is activated. In addition, not only for a step of manufacturing pharmaceutical products or food products, a technology which enables transport of a plurality of articles to a conveyor while avoiding an influence of the fallen articles is required. Accordingly, it is one of objects of the present invention to provide a transport device and a furnace system capable of transporting the plurality of articles onto the conveyor while avoiding an influence of the fallen articles. Solution to Problem

According to an aspect of the present invention, there is provided a transport device including: a support configured to allow a plurality of articles to be arranged on top; a discharging device configured to push the plurality of articles arranged on the support; a conveyor configured to transport the articles pushed out from the support; and a pusher configured to push back the unfallen articles among the articles pushed onto the conveyor toward the support and separate fallen articles from unfallen articles on the conveyor.

In the transport device described above, the discharging device may push out a greater number of rows of the articles than the number of rows of the articles transported each time by the conveyor onto the conveyor, and the pusher may push back the unfallen articles toward the support so that the articles remain on the conveyor by the number of rows to be transported each time by the conveyor.

In the transport device described above, the height at which the pusher comes into contact with the unfallen articles may be variable.

The transport device described above may further include an inserting member configured to be inserted between a surface of the conveyor and the fallen articles to place the fallen articles thereon, the inserting member moving in a direction opposite from the direction toward the support to move the fallen articles on the inserting member in the direction opposite from the direction toward the support.

The transport device described above may further include a push-out member configured to push out the fallen articles on the inserting member moving in the direction opposite from the direction toward the support onto the conveyor.

The transport device described above may further include a separation guide configured to guide a direction of travel of the fallen articles transported by the conveyor to a direction different from a direction of travel of the unfallen articles.

In the transport device described above, the discharging device may retract while supporting the articles while the pusher is pushing back the articles.

The transport device described above may further be provided a discharge guide configured to impede the movement of the articles in the direction of travel of the conveyor while the discharging device or the pusher is pushing the articles.

According to an aspect of the present invention, there is provided a furnace system including: a furnace;

a plate disposed in the furnace; a discharging device configured to push a plurality of articles arranged on the plate; a bridge disposed adjacent to the plate; a conveyor disposed adjacent to the bridge and disposed outside of the furnace for transporting the articles pushed out from the plate; and a pusher configured to push back unfallen articles among the articles pushed onto the conveyor in a direction toward the bridge to separate the unfallen articles from the fallen articles on the conveyor.

In the furnace system described above, the discharging device may push out a greater number of rows of the articles than the number of rows of the articles transported each time by the conveyor, and the pusher may push back the unfallen articles toward the bridge so that the articles remain on the conveyor by the number of rows to be transported each time by the conveyor.

In the furnace system described above, the articles are vials, and the furnace system described above may further include an upper plate disposed above the plate in the furnace and configured to come into contact with upper parts of caps of the vials which are half-capped and cap the vials.

In the furnace system described above, the furnace may be a freeze dry furnace.

In the furnace system described above, the height at which the pusher comes into contact with the unfallen articles may be variable.

The furnace system described above may further include an inserting member configured to be inserted between a surface of the conveyor and the fallen articles to place the fallen articles thereon, the inserting member moving in a direction opposite from the direction toward the bridge to move the fallen articles on the inserting member in the direction opposite from the direction toward the bridge.

The furnace system described above may further include a push-out member configured to push out the fallen articles on the inserting member moving in the direction opposite from the direction toward the bridge onto the conveyor.

The furnace system described above may further include a separation guide configured to guide a direction of travel of the fallen articles transported by the conveyor to a different direction from a direction of travel of the unfallen articles.

In the furnace system described above, the discharging device may retract while supporting the articles while the pusher is pushing back the articles.

The furnace system described above may further be provided a discharge guide configured to impede the movement of the articles in the direction of travel of the conveyor while the discharging device or the pusher is pushing the articles. Advantageous Effects of Invention

The present invention can provide a transport device and a furnace system capable of transporting a plurality of articles onto a conveyor while avoiding an influence of fallen articles.

Brief Description of the Drawings

[Fig. 1] Fig. 1 is a schematic top view of a transport device according to a first embodiment.

[Fig. 2] Fig. 2 is a schematic top view of the transport device according to the first embodiment.

[Fig. 3] Fig. 3 is a schematic side view of the transport device according to the first embodiment.

[Fig. 4] Fig. 4 is a schematic side view of the transport device according to the first embodiment.

[Fig. 5] Fig. 5 is a schematic side view of the transport device according to the first embodiment.

[Fig. 6] Fig. 6 is a schematic top view of the transport device according to the first embodiment.

[Fig. 7] Fig. 7 is a schematic side view of the transport device according to the first embodiment.

[Fig. 8] Fig. 8 is a schematic top view of the transport device according to the first embodiment.

[Fig. 9] Fig. 9 is a schematic top view of the transport device according to the first embodiment.

[Fig. 10] Fig. 10 is a schematic top view of the transport device according to the first embodiment.

[Fig. 11] Fig. 11 is a schematic top view of the transport device according to the first embodiment.

[Fig. 12] Fig. 12 is a schematic top view of a transport device according to a reference example.

[Fig. 13] Fig. 13 is a schematic top view of the transport device according to the reference example.

[Fig. 14] Fig. 14 is a schematic side view of a transport device according to a second embodiment.

[Fig. 15] Fig. 15 is a schematic side view of the transport device according to the second embodiment.

[Fig. 16] Fig. 16 is a schematic top view of a transport device according to a third embodiment.

[Fig. 17] Fig. 17 is a schematic top view of the transport device according to the third embodiment.

[Fig. 18] Fig. 18 is a schematic side view of the transport device according to the third embodiment.

[Fig. 19] Fig. 19 is a schematic top view of the transport device according to the third embodiment.

[Fig. 20] Fig. 20 is a schematic side view of a transport device according to a fourth embodiment.

[Fig. 21] Fig. 21 is a schematic perspective view of the transport device according to the fourth embodiment.

[Fig. 22] Fig. 22 is a schematic side view of the transport device according to the fourth embodiment.

[Fig. 23] Fig. 23 is a schematic side view of the transport device according to the fourth embodiment.

[Fig. 24] Fig. 24 is a schematic perspective view of the transport device according to the fourth embodiment.

[Fig. 25] Fig. 25 is a schematic side view of the transport device according to the fourth embodiment.

Description of Embodiments

An embodiment of the present invention will be described below. In the following drawings, the same or similar parts are designated by the same or similar reference signs. However, the drawings are schematic illustrations. Therefore, specific dimensions or the like are to be determined based on the following description. In addition, the drawings may include parts having different dimensional relationships and ratios from each other as a matter of course.

(First Embodiment)

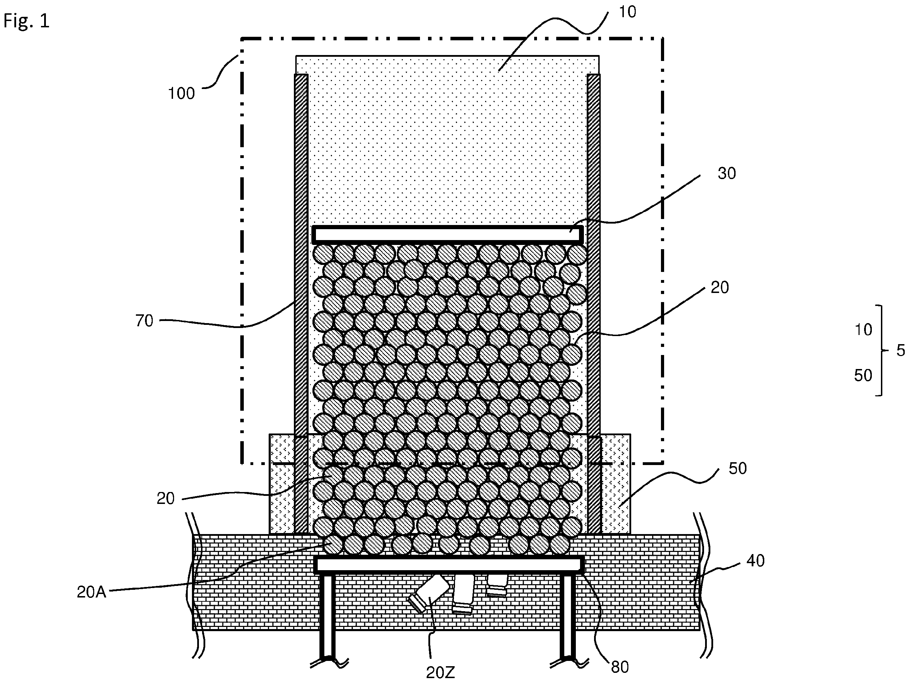

A transport device according to an embodiment includes: as illustrated in Fig. 1, a support 5 configured to allow a plurality of articles 20 to be arranged on top; a discharging device 30 configured to push the plurality of articles 20 arranged on the support 5; a conveyor 40 configured to transport articles pushed out from the support 5; and a pusher 80 configured to push back unfallen articles 20A among the articles 20 pushed onto the conveyor 40 toward the support 5 to separate unfallen articles 20A from fallen articles 20Z on the conveyor 40.

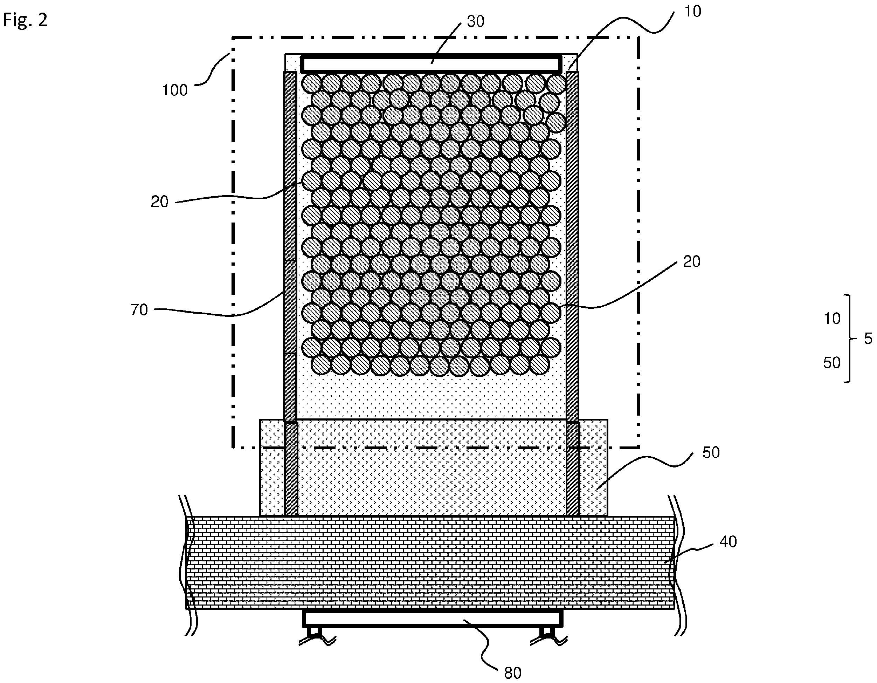

The support 5 includes, as illustrated in Fig. 2, a plate 10 disposed in a closed space 100, and a bridge 50 of which at least part is disposed out of the closed space 100. The bridge 50 is disposed between the plate 5 and the conveyor belt 40. The closed space 100 may be provided, for example, by a furnace, a tank, a storage room, and the like. In the closed space 100, at least one of a temperature and a pressure may be controlled. In the closed space 100, at least one of temperature distribution and pressure distribution may be controlled. The furnace may be a freeze dry furnace. The closed space 100 may be released by a door or the like. In the following description, an example in which the furnace is a freeze dry furnace will be described.

Each of the plurality of articles 20 is, but not specifically limited to, a container such as a vial that stores pharmaceutical products to be subject, for example, to treatment such as freeze drying. In the following description, an example in which the articles 20 are vials will be described. Each of the plurality of articles 20 includes, for example, a cylindrical shape. The plurality of articles 20 may be arranged in a staggered manner (staggered arrangement) such that a larger number of articles 20 can be arranged on the plate 10. In this case, the plurality of articles 20 are arranged in an overlapped manner when viewed from a side of a direction of travel of the discharging device 30. The plurality of articles 20 are arranged such that centers are alternating with each other by row extending substantially parallel to the conveyor 40 when viewed from above.

For example, respective centers of the articles 20 in a second row are shifted with respect to the respective centers of the articles 20 in a first row on a conveyor 40 side in a direction of the row. However, the respective centers of the articles 20 in a third row are not generally shifted with respect to the respective centers of the articles 20 in the first row in the direction of the row. The centers of the plurality of articles 20 may be recognized as being arranged at intersections of a triangle grid pattern. However, in this disclosure, a triangle forming the triangle grid pattern may be, and may not be a regular triangle.

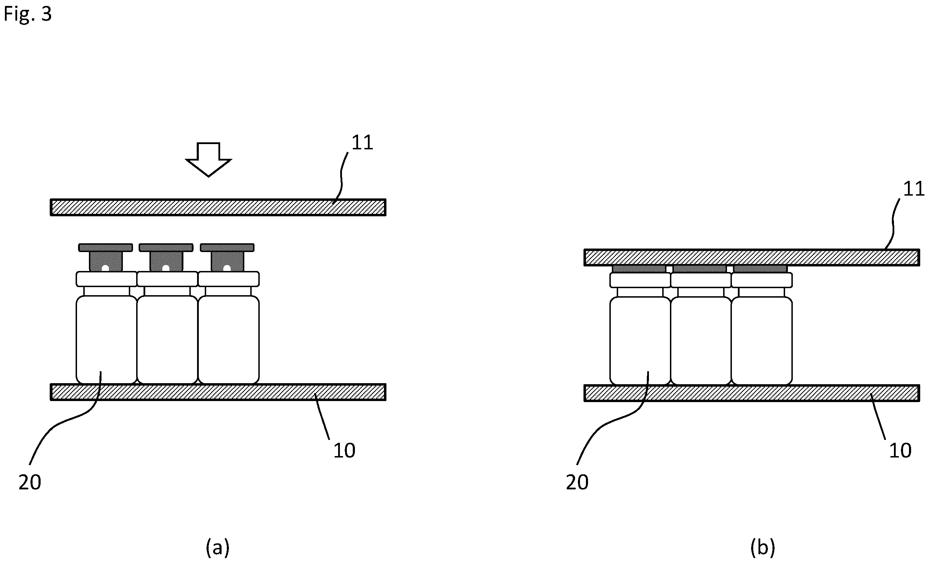

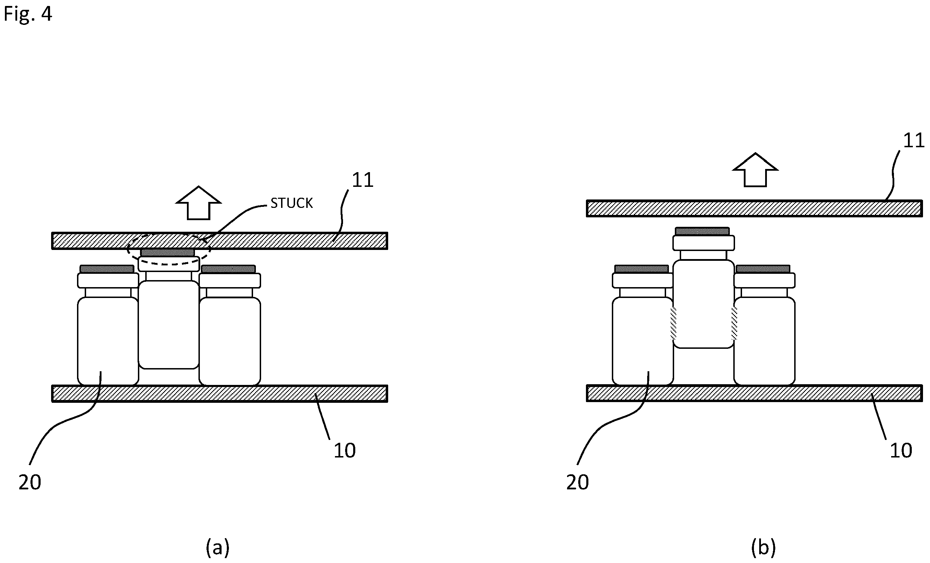

The articles 20, which are vials containing a drug therein, are carried into the freeze dry furnace on the plate 10 in a state of being semi-capped. The cap is made, for example, of an elastic material such as rubber. When the drug in the interior is freeze dried, an upper plate 11 disposed above the plate 10 in the freeze dry furnace moves downward and presses the caps that are semi-capping the vials to cap the vials as illustrated in Fig. 3. Alternatively, the vials may be capped by moving the plate 10 upward toward the upper plate 11 to bring the upper parts of the caps into contact with the upper plate 11. Then, as illustrated in Fig. 4, the upper plate 11 is moved upward so that the vials can be carried out from the freeze dry furnace. Alternatively, the plate 10 may be moved downward so that the vials can be carried out from the freeze dry furnace .

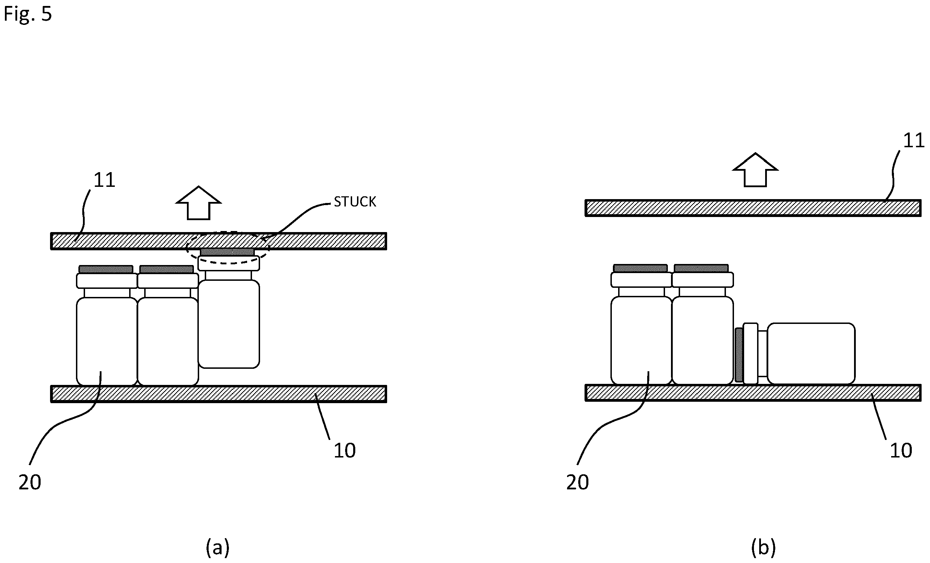

When the plate 10 and the upper plate 11 move relatively away from each other, the caps of some vials stick fast to the upper plate 11, and the some of the vials may be pulled up by the upper plate 11. In this situation, the vial surrounded by other vials tends to drop to its original position without being fallen over, or to be held by the surrounding vials in a state of being suspended without being fallen over even when it is pulled up by the upper plate 11. In contrast, as illustrated in Fig. 5, the vial that is not surrounded by other vials like the vial in the first row on the conveyor 40 side tends to drop and fall over when pulled up by the upper plate 11.

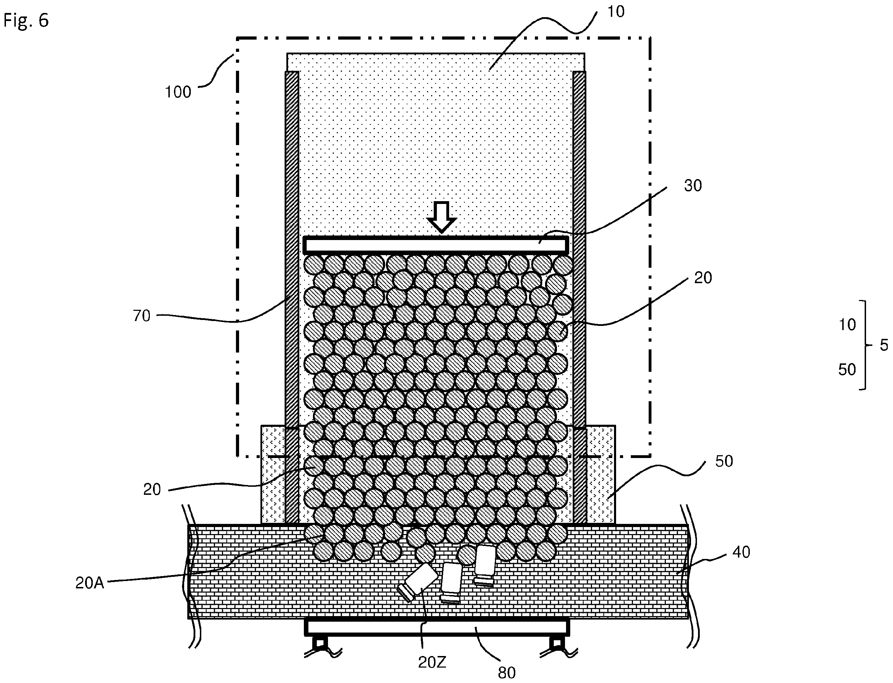

As illustrated in Fig. 6, a bridge 50 is disposed adjacent to the plate 10. The conveyor 40 is disposed adjacent to the bridge 50. When the plurality of articles 20 are taken out from the closed space 100 after capping has completed, the door of the furnace or the like that provides the closed space 100 is opened, and the discharging device 30 pushes out the plurality of articles 20 on the plate 10 toward the conveyor 40 via the bridge 50. The discharging device 30 has, for example, a shape capable of coming into contact with an innermost row of the plurality of articles 20 in the closed space 100. In other words, the discharging device 30 has a shape capable of coming into contact with the row of the articles 20 on the side opposite from the conveyor 40 among the plurality of articles 20 on the plate 10. The shape of the discharging device 30 is, for example, a bar. The direction of travel of the discharging device 30 is, for example, parallel to upper surfaces of the plate 10 and the bridge 50, and perpendicular to the direction of transport of the conveyor 40. A guide 70 may be provided in a vicinity of the plate 10 and the bridge 50 to prevent the articles 20 pushed by the discharging device 30 from spreading laterally with respect to the direction of travel of the discharging device 30.

The height of the conveyor 40 and the height of the bridge 50 are adjusted so that the articles 20 do not fall over. The discharging device 30 pushes a larger number of rows of the articles 20 than the number of rows of the articles 20 transported by the conveyor 40 each time onto the conveyor 40. For example, if the number of rows of the articles 20 to be transported by the conveyor 40 each time is one, the discharging device 30 pushes predetermined two or more rows of the articles 20 onto the conveyor 40 . After the predetermined number of rows of the articles 20 are pushed onto the conveyor 40, the discharging device 30 stops.

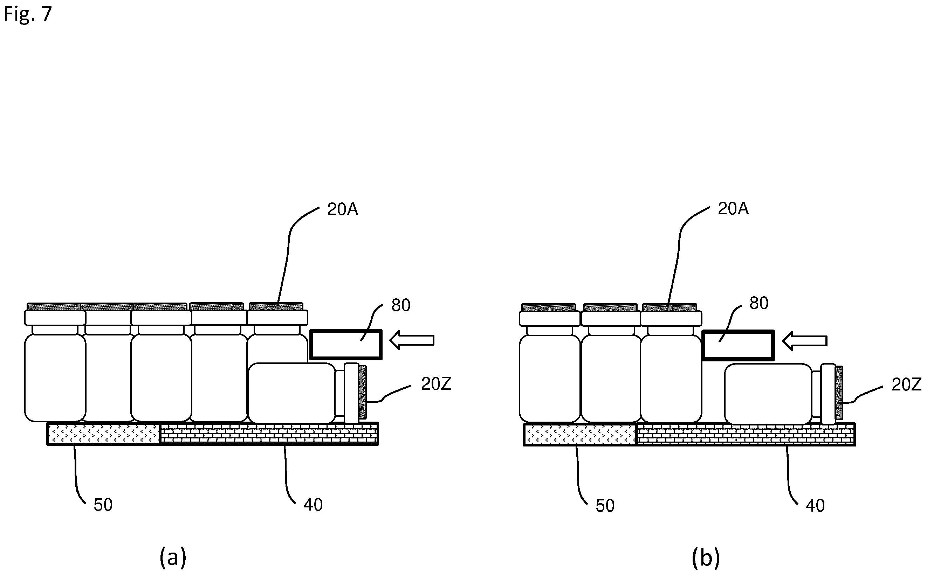

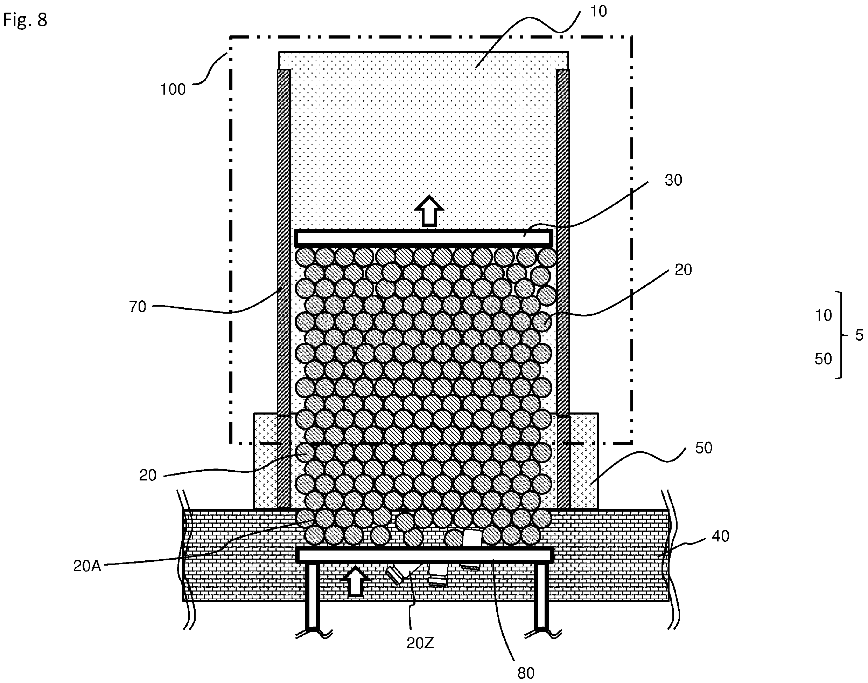

As illustrated in Fig. 7, the pusher 80 is set to a position higher than the fallen articles 20Z among the articles 20 pushed out onto the conveyor 40. The direction of travel of the pusher 80 is, for example, parallel to upper surfaces of the plate 10 and the bridge 50, and perpendicular to the direction of transport of the conveyor 40. After the discharging device 30 has pushed out a predetermined row of articles 20 onto the conveyor 40, the pusher 80 moves toward the plate 10 and the bridge 50 and pushes back the articles 20A standing upright without having fallen over among the articles 20 pushed out onto the conveyor 40 in a direction toward the plate 10 and the bridge 50 as illustrated in Fig. 7 and Fig. 8. While the pusher 80 pushes back the articles 20 on the conveyor 40 side, the discharging device 30 may cooperate with the pusher 80 and retract at the same speed as the speed of the pusher 80 while supporting the articles 20 by coming into contact with the row of the articles 20 in the last row, so that the row of articles 20 in the last row may not fall over.

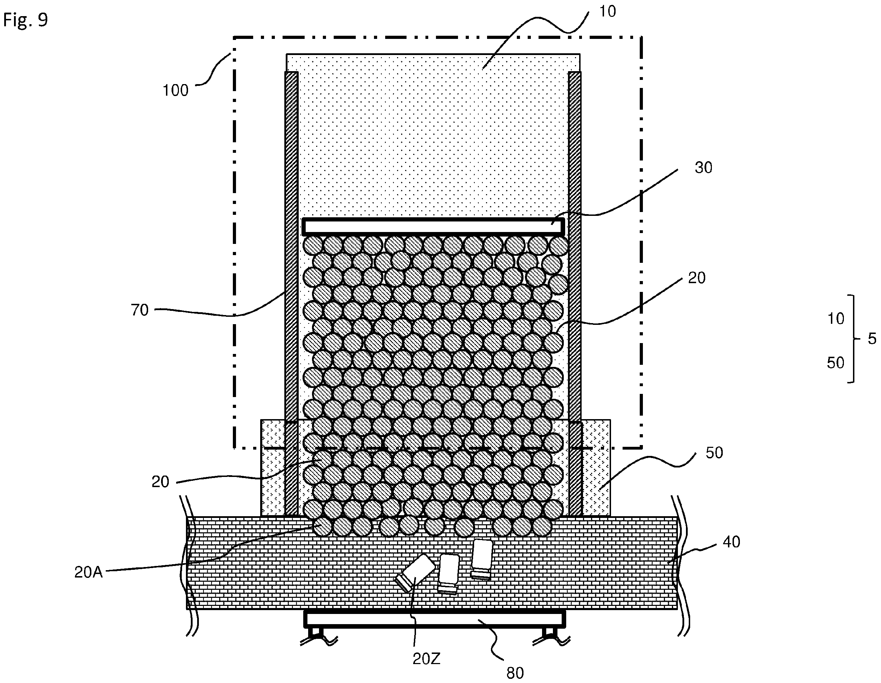

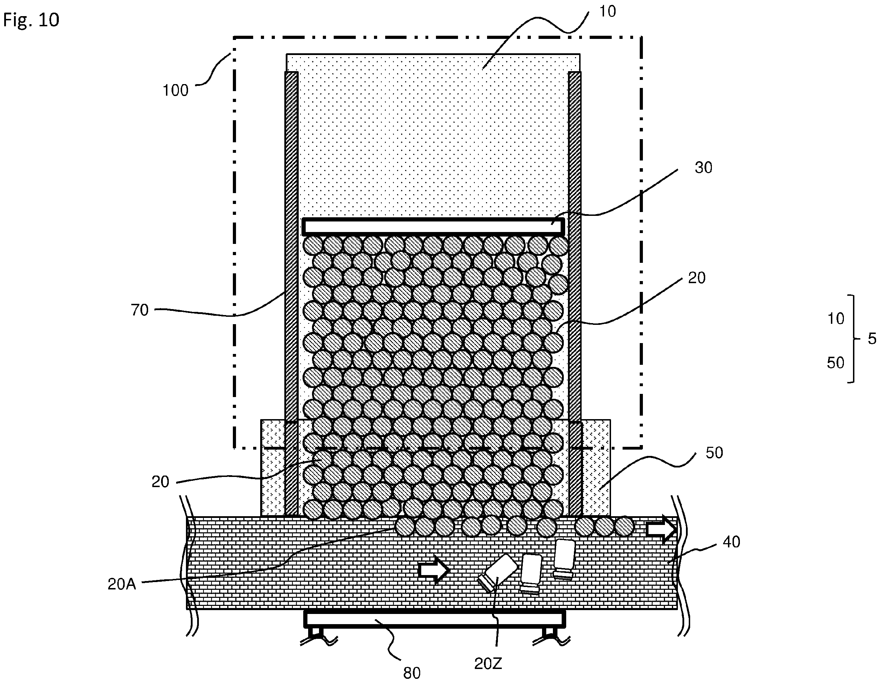

Since the pusher 80 is disposed at a position higher than the fallen articles 20Z, the pusher 80 does not come into contact with the fallen articles 20Z and pass over the fallen articles 20Z while pushing the unfallen articles 20A. Therefore, the fallen articles 20Z are not pushed by the pusher 80 and stay at the same positions on the conveyor 40. Accordingly, as illustrated in Fig. 1, the unfallen articles 20A are separated from the fallen articles 20Z on the conveyor 40. The pusher 80 stops when the articles 20 by the number of rows to be transported by the conveyor 40 each time remain on the conveyor 40 and retracts to a position where transport of the articles 20 on the conveyor 40 is not impeded, as illustrated in Fig. 9. Subsequently, as illustrated in Fig. 10, the conveyor 40 is activated and transports the unfallen articles 20A and the fallen articles 20Z.

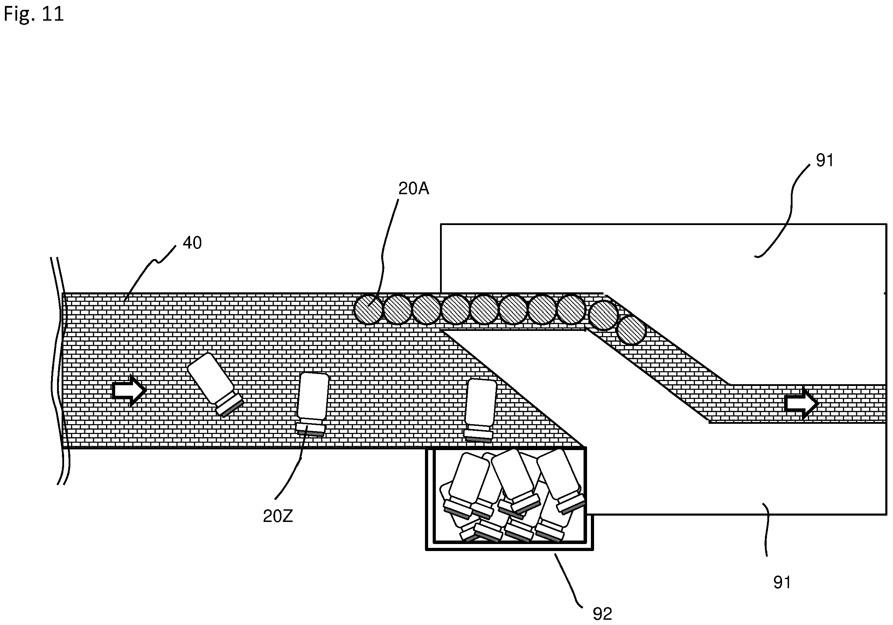

As illustrated in Fig. 11, the transport device according to the embodiment may further include a separation guide 91 configured to guide the direction of travel of the fallen articles 20Z transported by the conveyor 40 to a direction different from the direction of travel of the unfallen articles 20A. The separation guide 91 is disposed at a position on the conveyor 40, to which the fallen articles 20Z are transported. The fallen articles 20Z come into contact with the separation guide 91, and drop into, for example, a recycling bin 92 from the conveyor 40. The separation guide 91 may support the unfallen articles 20A from both sides and change the direction of travel of the unfallen articles 20A while maintaining the row.

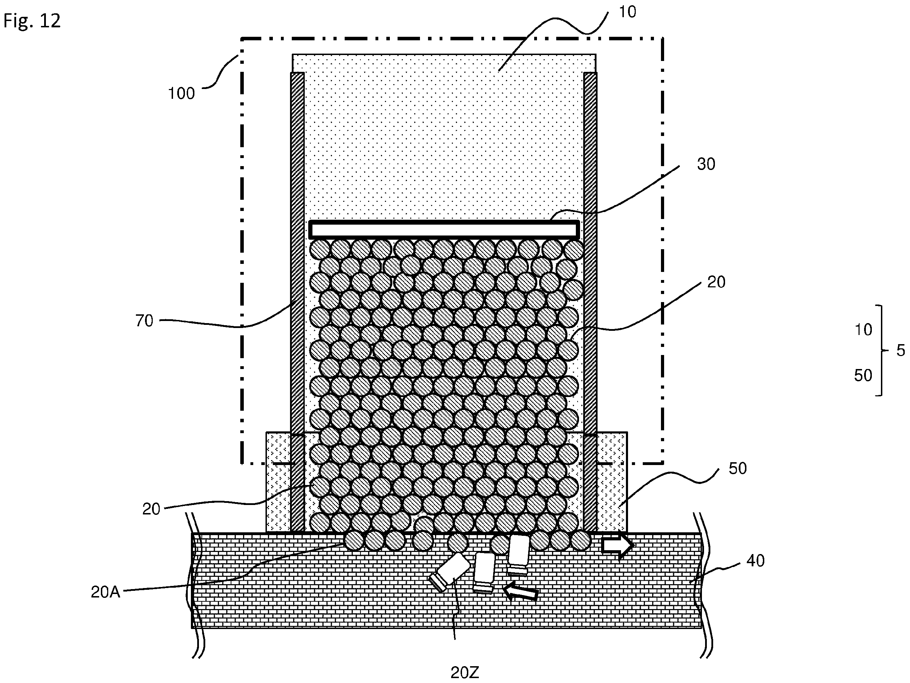

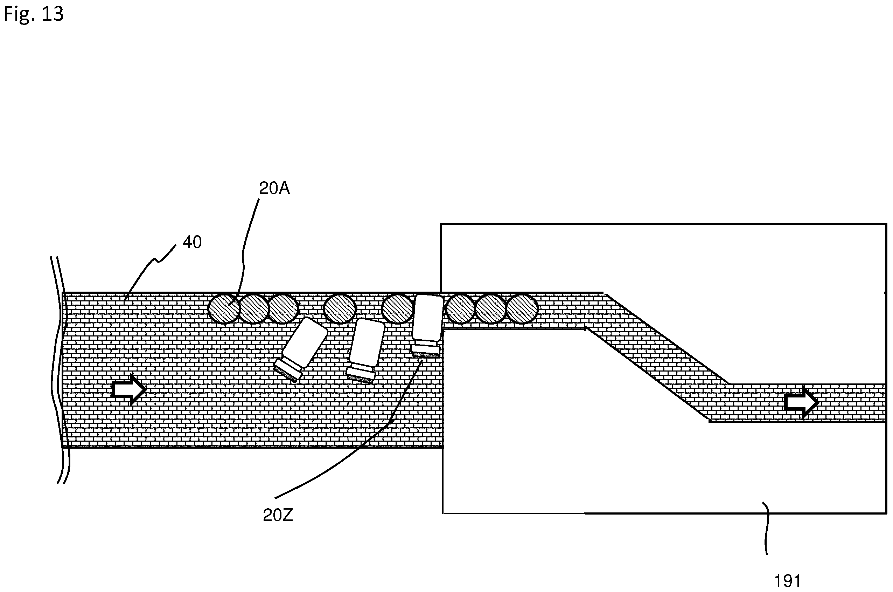

Now, as illustrated in Fig. 12, there is a case where the fallen articles 20Z may collide against the unfallen articles 20A and the unfallen articles 20A may fall over if the conveyor 40 is activated without the fallen articles 20Z separated from the unfallen articles 20A. As illustrated in Fig. 13, the fallen articles 20Z may be caught by a guide 191, which may impede the transport of the articles 20.

In contrast, the fallen articles 20Z are separated from the unfallen articles 20A on the conveyor 40 illustrated in Fig. 9 according to the transport device of the embodiment, so that the probability of collision of the fallen articles 20Z against the unfallen articles 20A may be reduced. In addition, the fallen articles 20Z may be inhibited from being caught by the guide for guiding the direction of travel of the unfallen articles 20A.

(Second Embodiment)

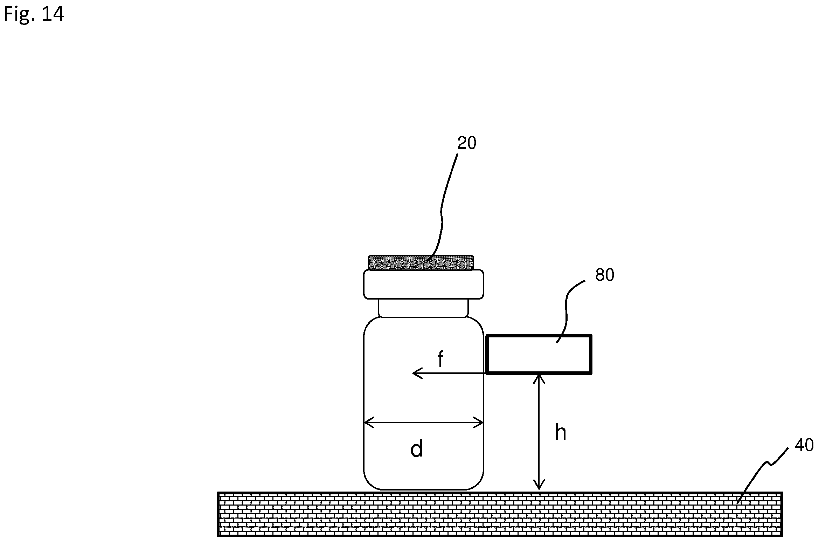

As illustrated in Fig. 14, where d is a diameter of the articles 20, w is a weight of the article 20, μ is a friction coefficient between the articles 20 and the conveyor 40, h is a height of the pusher 80, and f is a force of the pusher 80 pushing the articles 20, and the articles 20 are assumed to have a cylindrical shape, the height h of the pusher 80 which does not cause isolated articles 20 to fall over is obtained by the expression (1) given below:

$$h < (w \cdot d) / (2f) \quad (1).$$

The force f needed for starting the movement of the articles 20 is obtained by the following expression (2):

$$f = \mu w \quad (2).$$

Therefore, from the expressions (1) and (2) , the height h of the pusher 80 which does not cause isolated articles 20 to fall over is obtained by the following expression (3):

$$h < d / (2\mu) \quad (3).$$

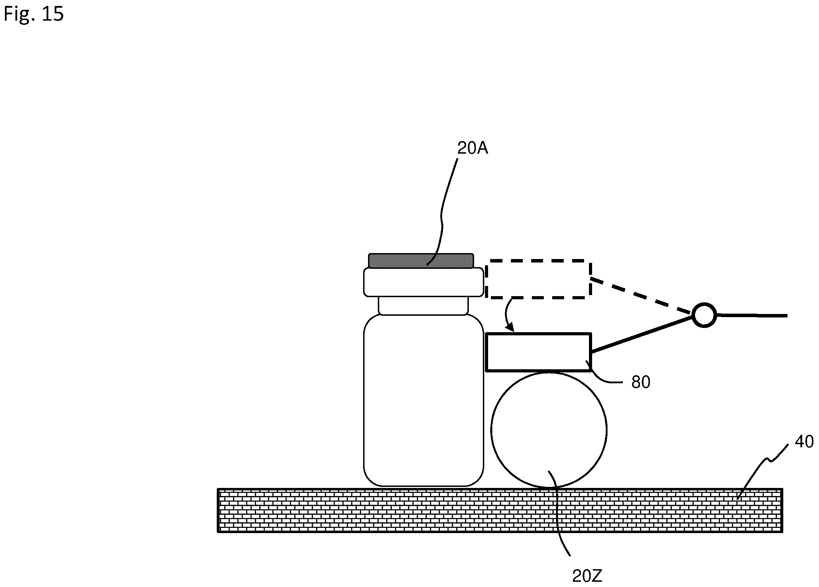

Therefore, the height h of the pusher 80 which does not cause the articles 20 to fall over tends to increase as the diameter d of the articles 20 increases. Likewise, the height h of the pusher 80 which does not cause the articles 20 to fall over tends to decrease as

the friction coefficient μ increases. In any cases, the articles 20 tend to be less likely to fall over as the height of the pusher 80 decreases. Therefore, as illustrated in Fig. 15, the height at which the pusher 80 comes into contact with the unfallen articles 20A may be variable within a range that does not cause the contact with the fallen articles 20Z. When there is no fallen article 20A, the height at which the pusher 80 comes into contact with the unfallen articles 20Z may be lowered as much as possible. The height h of the pusher 80 may be adjusted by, for example, a drive unit such as a motor to be controlled by a control device.

(Third Embodiment)

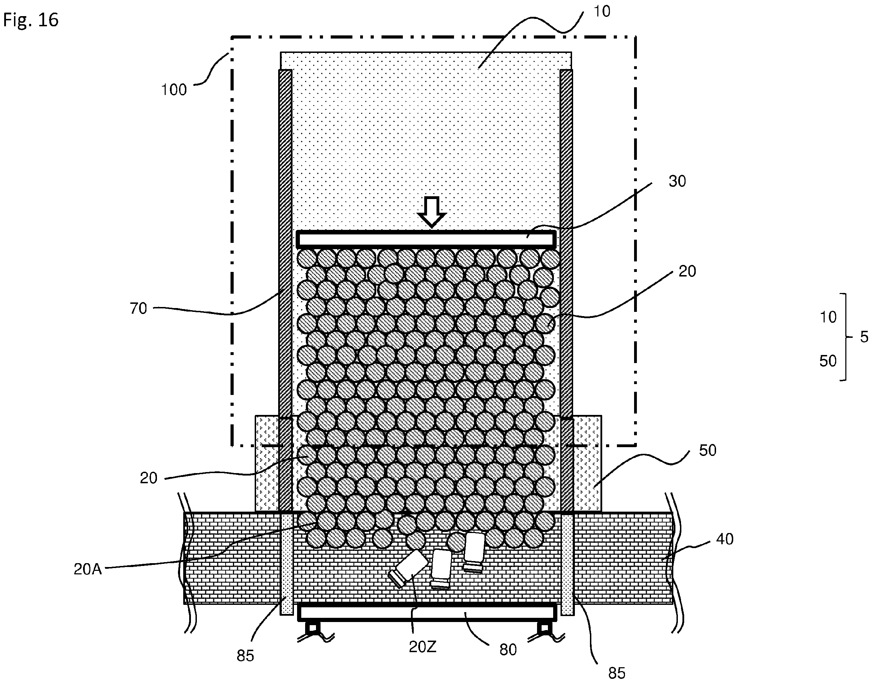

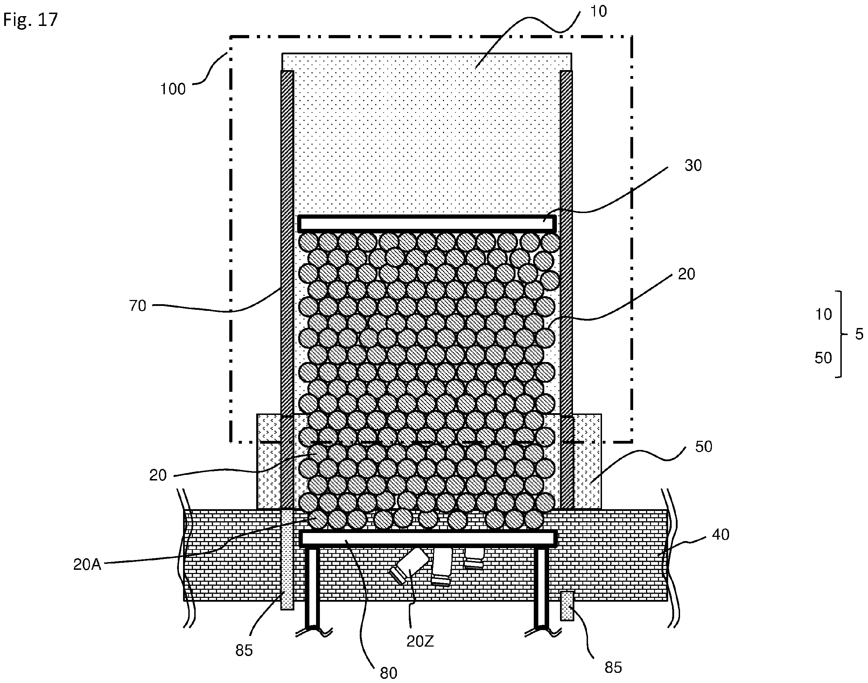

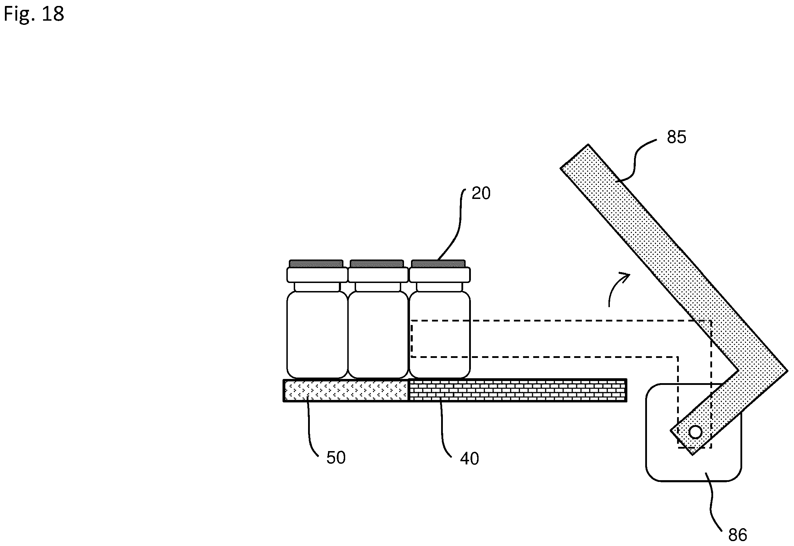

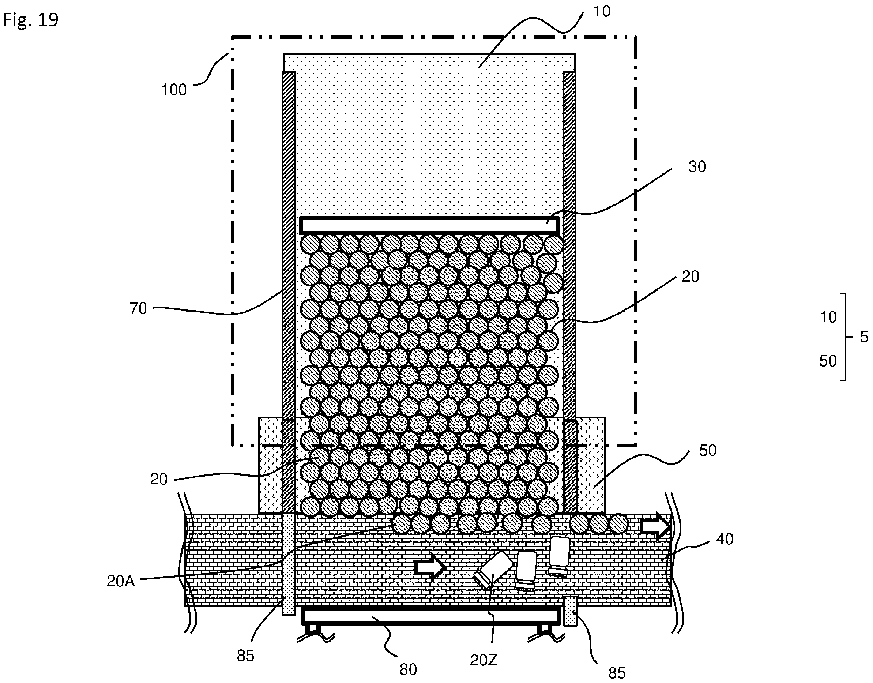

A transport device according to the embodiment may further include a discharge guide 85 configured to impede movement of the articles 20 in the direction of travel of the conveyor 40 while the discharging device 30 or the pusher 80 is pushing the articles 20 as illustrated in Fig. 16. The discharge guide 85 opposes both ends of the row of the articles 20. The articles 20 may spread out on the conveyor 40 in the direction of the row when being pushed by the discharging device 30 or the pusher 80. In contrast, the discharge guide 85 inhibits the articles 20 from spreading out in the direction of the row by coming into contact with the articles 20. As illustrated in Fig. 17 and Fig. 18, after the pusher 80 pushes back the unfallen articles 20A, the discharge guide 85 is driven by a drive unit 86, such as a motor, and is retracted to a position where transport of the articles 20 by the conveyor 40 is not impeded. Subsequently, as illustrated in Fig. 19, the articles 20 may be transported by the conveyor 40.

(Fourth Embodiment)

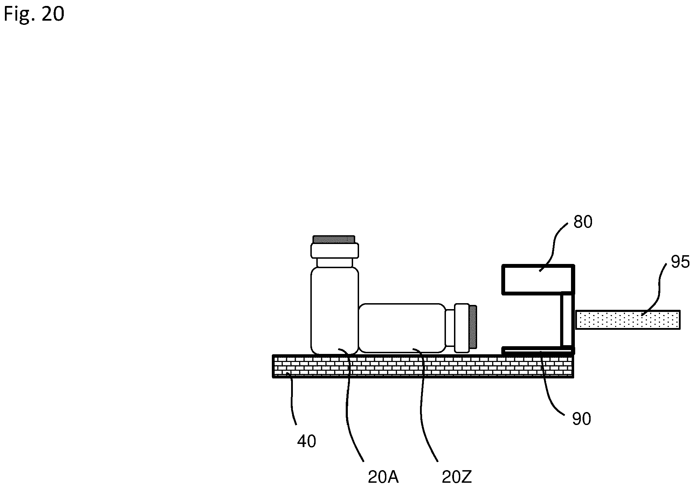

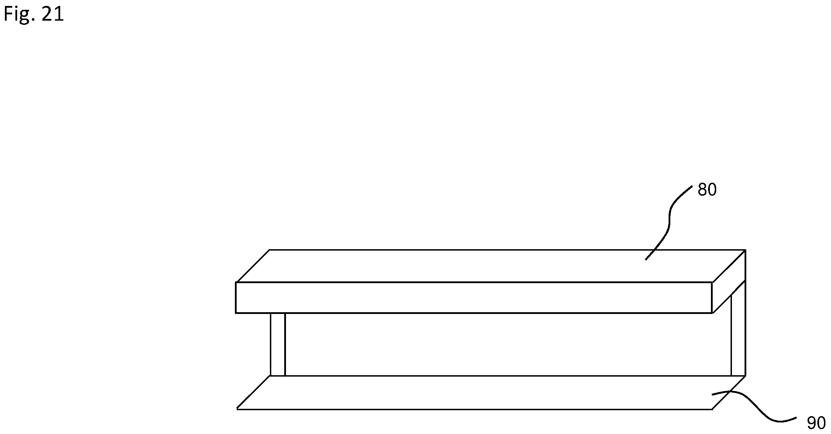

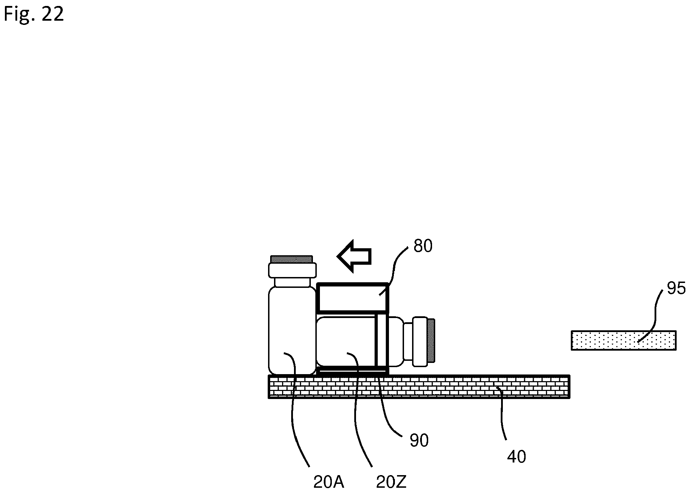

A transport device according to the embodiment may further include an inserting member 90 to be inserted between a surface of the conveyor 40 and the fallen articles 20Z, as illustrated in Fig. 20 and Fig. 21. The inserting member 90 may have, for example, a sheet shape, and move on the surface of the conveyor 40. The inserting member 90 is connected for example to the pusher 80 and moves together with the pusher 80. As illustrated in Fig. 22, when the pusher 80 approaches the unfallen articles 20A, the inserting member 90 is inserted between the surface of the conveyor 40 and the fallen articles 20Z. Therefore, the fallen articles 20Z are placed on the inserting member 90.

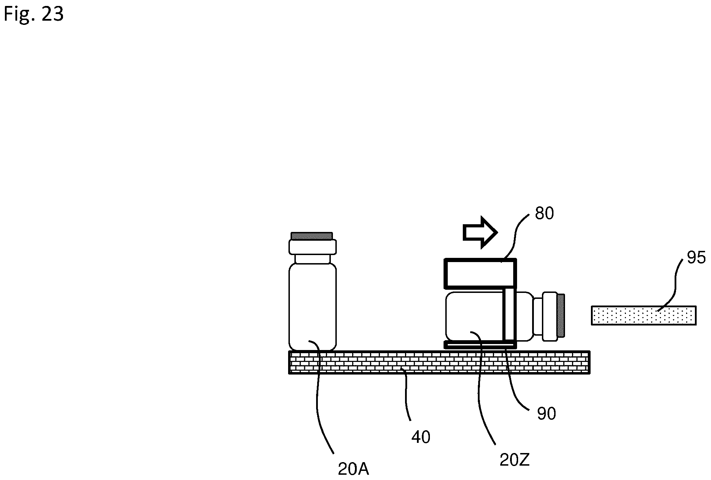

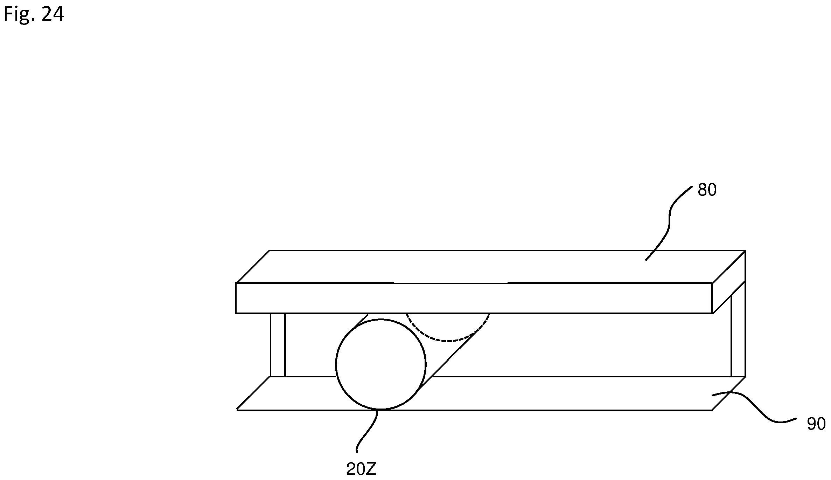

As illustrated in Fig. 23 and Fig. 24, when the pusher 80 has pushed the unfallen articles 20A to a predetermined position, and then the pusher 80 is retracted in a direction opposite from a direction toward the plate 10 and the bridge 50, the inserting member 90 is also retracted in the direction opposite from the direction toward the plate 10 and the bridge 50. In association with these movements, the fallen articles 20Z on the inserting member 90 are also moved in the direction opposite from the direction toward the plate 10 and the bridge 50. Therefore, the fallen articles 20Z may be moved away from the unfallen articles 20A on the conveyor 40.

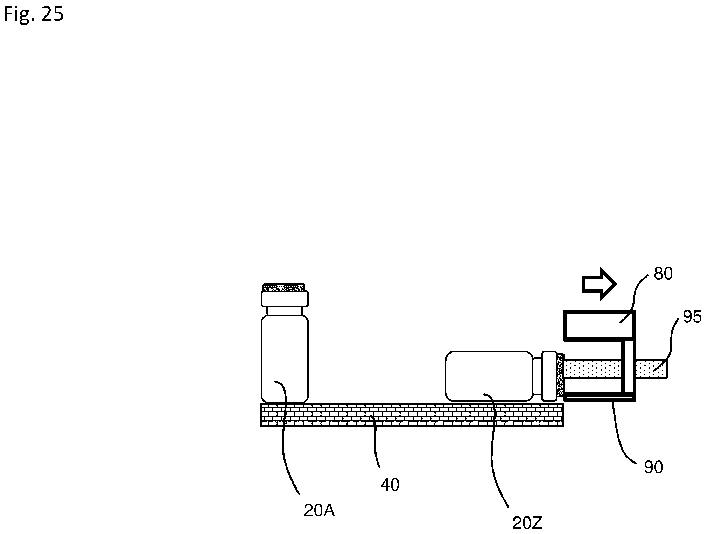

The transport device according to the embodiment further includes a push-out member 95 configured to push out the fallen articles 20Z on the inserting member 90 moving in the direction opposite from the direction toward the plate 10 and the bridge 50 onto the conveyor 40, as illustrated in Fig. 25. When the inserting member 90 approaches the push-out member 95, the fallen articles 20Z on the inserting member 90 come into contact with the push-out member 95 and are pushed out from the inserting member 90 onto the conveyor 40. The fallen articles 20Z pushed out onto the conveyor 40 may be guided, for example, to the recycling bin 92 by the separation guide 91, for example, as illustrated in Fig. 11.

(Other Embodiments)

Although the present invention has been described based on the embodiments as described above, description and drawings which constitute part of this disclosure should not be interpreted to limit the present invention. From this disclosure, various alternative embodiments, examples, and operational technologies will become apparent for those skilled in the art. For example, articles to be transported in or out of the furnace are not limited to those including pharmaceutical products, but may be articles such as food products, beverages, and precision parts, and may include any articles . The furnace is not limited to the freeze dry furnace, and may be a fermentation furnace, or any furnace which requires restraint of unevenness in temperature distribution or restraint of generation of dust in the interior. In this manner, it should be understood that the present invention includes various embodiments which are not described in this specification.

Reference Signs List

10 ... plate, 11 ... upper plate, 20 ... article 20A ... article, 20Z ... article, 30 ... discharging device, 40 ... conveyor, 50 ... bridge, 70 ... guide, 80 ... pusher, 85 ... discharge guide, 86 ... drive unit, 90 ... inserting member, 91 ... separation guide, 92 ... recycling bin, 95 ... push-out member, 100 ... closed space, 191 ... guide

**Claims**

**1.** A transport device comprising:

a support configured to allow a plurality of articles to be arranged on top;
a discharging device configured to push the plurality of articles arranged on the support;
a conveyor configured to transport the articles pushed out from the support; and
a pusher configured to push back unfallen articles among the articles pushed onto the conveyor toward the support to separate the unfallen articles on the conveyor from the fallen articles.

**2.** The transport device according to Claim 1, wherein the discharging device pushes on the conveyor a larger number of rows of the articles than the number of rows of the articles transported by the conveyor each time, and
the pusher pushes back the unfallen articles toward the support so that the articles by the number of rows to be transported by the conveyor each time remain on the conveyor.

**3.** The transport device according to Claim 1 or 2, wherein a height at which the pusher comes into contact with unfallen articles is variable.

**4.** The transport device according to Claim 1 or 2, further comprising an inserting member configured to be inserted between a surface of the conveyor and the fallen articles to place the fallen articles thereon, the inserting member moving in a direction opposite from a direction toward the support to move the fallen articles on the inserting member in the direction opposite from the direction toward the support.

**5.** The transport device according to Claim 4, further comprising a push-out member configured to eject the fallen articles on the inserting member moving in the direction opposite from the direction toward the support onto the conveyor.

**6.** The transport device according to Claim 1 or 2, further comprising a separation guide configured to guide a direction of travel of the fallen articles transported by the conveyor to a direction different from the direction of travel of the unfallen articles.

**7.** The transport device according to Claim 1 or 2, wherein the discharging device is retracted while supporting the articles while the pusher is pushing back the articles.

**8.** The transport device according to Claim 1 or 2, further comprising a discharge guide configured to impede movement of the articles in the direction of travel of the conveyor while the discharging device or the pusher is pushing the articles.

**9.** A furnace system comprising:

a furnace;
a plate disposed in the furnace;
a discharging device configured to push a plurality of articles arranged on the plate;
a bridge disposed adjacent to the plate;
a conveyor disposed adjacent to the bridge and disposed outside of the furnace for transporting the articles pushed out from the plate; and
a pusher configured to push back unfallen articles among the articles pushed onto the conveyor toward the bridge to separate the unfallen articles on the conveyor from the fallen articles.

**10.** The furnace system according to Claim 9, wherein the articles are vials, and
an upper plate disposed above the plate in the furnace and configured to come into contact with upper parts of caps of the vials which are half-capped and cap the vials is further provided.

5
10
50

Fig. 1

5
10
50

Fig. 2

Fig. 3

11
10
20
(b)

11
10
20
(a)

11
10
20
(b)

Fig. 4

11
STUCK
10
20
(a)

11
10
20
(b)

STUCK
11
10
20
(a)

Fig. 5

5
10
50
100
10
30
20
70
20
50
40
20A
80
20Z

Fig. 6

Fig. 7

20Z
80
20A
40
50
(b)
20Z
80
20A
40
50
(a)

5
10
50

10
30
20
50
40
80
20Z
100
70
20
20A

Fig. 8

5
10
50

Fig. 9

5
10
50

Fig. 10

10
30
20
50
40
100
70
20
20A
20Z
80

91
91
92
20A
20Z
40

Fig. 11

5
10
50

Fig. 12

191
20Z
20A
40

Fig. 13

20
80
40
f
d
h

Fig. 14

40
80
20Z
20A

Fig. 15

5
10
50

Fig. 16

5
10
50

Fig. 17

85
86
20
40
50

Fig. 18

5
10
50

Fig. 19

95
80
90
20Z
20A
40

Fig. 20

80
90

Fig. 21

95
40
80
90
20Z
20A

Fig. 22

95
80
90
20Z
40
20A

Fig. 23

80
90
20Z

Fig. 24

80
95
90
20Z
40
20A

Fig. 25

## INTERNATIONAL SEARCH REPORT

International application No.
PCT/JP2018/015608

A. CLASSIFICATION OF SUBJECT MATTER
Int.Cl. B65G47/53(2006.01)i, B65G47/08(2006.01)i, B65G47/14(2006.01)i, B65G47/256(2006.01)i, B65G47/82(2006.01)i

According to International Patent Classification (IPC) or to both national classification and IPC

B. FIELDS SEARCHED
Minimum documentation searched (classification system followed by classification symbols)
Int.Cl. B65G47/53, B65G47/08, B65G47/14, B65G47/256, B65G47/82

Documentation searched other than minimum documentation to the extent that such documents are included in the fields searched

| | |
|---|---|
| Published examined utility model applications of Japan | 1922-1996 |
| Published unexamined utility model applications of Japan | 1971-2018 |
| Registered utility model specifications of Japan | 1996-2018 |
| Published registered utility model applications of Japan | 1994-2018 |

Electronic data base consulted during the international search (name of data base and, where practicable, search terms used)

C. DOCUMENTS CONSIDERED TO BE RELEVANT

| Category* | Citation of document, with indication, where appropriate, of the relevant passages | Relevant to claim No. |
|---|---|---|
| A | JP 6-24567 A (YAGUCHI TEKKOSHO KK) 01 February 1994 (Family: none) | 1-10 |
| A | Microfilm of the specification and drawings annexed to the request of Japanese Utility Model Application No. 100258/1990 (Laid-open No. 58518/1992) (KIRIN BREWERY) 20 May 1992 (Family: none) | 1-10 |
| A | JP 2001-97547 A (SHIBUYA KOGYO CO., LTD.) 10 April 2001, fig. 1 (Family: none) | 1-10 |

☒ Further documents are listed in the continuation of Box C. ☐ See patent family annex.

* Special categories of cited documents:
"A" document defining the general state of the art which is not considered to be of particular relevance
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| 21.05.2018 | 29.05.2018 |

| Name and mailing address of the ISA/ | Authorized officer |
|---|---|
| Japan Patent Office<br>3-4-3, Kasumigaseki, Chiyoda-ku,<br>Tokyo 100-8915, Japan | Telephone No. |

Form PCT/ISA/210 (second sheet) (January 2015)

INTERNATIONAL SEARCH REPORT

International application No. PCT/JP2018/015608

C (Continuation). DOCUMENTS CONSIDERED TO BE RELEVANT

| Category* | Citation of document, with indication, where appropriate, of the relevant passages | Relevant to claim No. |
|---|---|---|
| A | Microfilm of the specification and drawings annexed to the request of Japanese Utility Model Application No. 17619/1991 (Laid-open No. 115817/1992) (YUKIJIRUSHI ROORII KK) 15 October 1992, fig. 1 (Family: none) | 1-10 |
| A | Microfilm of the specification and drawings annexed to the request of Japanese Utility Model Application No. 75199/1988 (Laid-open No. 180422/1989) (KIRIN BREWERY) 26 December 1989, fig. 5-9 (Family: none) | 1-10 |
| A | US 2012/0279828 A1 (KRONES AG) 08 November 2012, paragraphs [0051]-[0055], fig. 1-6 & EP 2520521 A1 & DE 102011050185 A1 & CN 102774631 A | 1-10 |

Form PCT/ISA/210 (continuation of second sheet) (January 2015)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- EP 1717533 B
- WO 2015082563 A
- US 2009208320 A